(19) Europäisches Patentamt / European Patent Office / Office européen des brevets

(11) **EP 3 434 800 A1**

(12) **EUROPEAN PATENT APPLICATION**
published in accordance with Art. 153(4) EPC

(43) Date of publication:
**30.01.2019 Bulletin 2019/05**

(21) Application number: **17769683.8**

(22) Date of filing: **07.02.2017**

(51) Int Cl.:
*C22C 38/00* (2006.01)      *C22C 38/38* (2006.01)
*C21D 8/02* (2006.01)

(86) International application number:
**PCT/JP2017/004348**

(87) International publication number:
**WO 2017/163636 (28.09.2017 Gazette 2017/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.03.2016   JP 2016059874
22.12.2016   JP 2016249063**

(71) Applicant: **Nisshin Steel Co., Ltd.
Chiyoda-ku, Tokyo 100-8366 (JP)**

(72) Inventors:
• **MITSUNAGA Seiji
Tokyo 100-8366 (JP)**
• **EHARA Yasuhiro
Tokyo 100-8366 (JP)**

(74) Representative: **Schmidbauer, Andreas Konrad
Wagner & Geyer Partnerschaft
Patent- und Rechtsanwälte
Gewürzmühlstrasse 5
80538 München (DE)**

(54) **TI-CONTAINING FERRITIC STAINLESS STEEL SHEET HAVING GOOD TOUGHNESS, AND FLANGE**

(57)     [Problem] To provide a Ti-containing ferritic stainless steel sheet having good toughness.

[Solution] A Ti-containing ferritic stainless steel sheet having a chemical composition containing, in terms of percentage by mass, from 0.003 to 0.030% of C, 2.0% or less of Si, 2.0% or less of Mn, 0.050% or less of P, 0.040% or less of S, from 10.0 to 19.0% of Cr, 0.030% or less of N, 4(C+N) or more and 0.80% or less of Ti, and from 0.010 to 0.20% of Al, furthermore one or more of 1.50% or less of Mo and 0.0030% or less of B if necessary, with the balance of Fe and unavoidable impurities, and having a content R (% by mass) of an extraction residue recovered by an electrolytic extraction method and contents of C and N in the steel that satisfy the following expression (1):

$$R > 5.0C + 4.4N - 0.025 \qquad (1)$$

**Description**

[Technical Field]

The present invention relates to a Ti-containing ferritic stainless steel having good toughness, and also relates to a flange using the steel sheet.

[Background Art]

There is an increasing demand of a Ti-containing ferritic stainless steel sheet for an automobile exhaust gas flow path and the like in recent years due to the good characteristics thereof including corrosion resistance, heat resistance, and the like. However, the Ti-containing ferritic stainless steel sheet has a problem that the toughness thereof tends to be reduced. As a flange used in an automobile exhaust gas flow path, there are large needs of a steel sheet having a large gauge thickness (for example, a sheet thickness of from 5.0 to 11.0 mm). With a large sheet thickness, the influence of the reduction in toughness tends to be conspicuous.

Various attempts have been made for improving the toughness of the Ti-containing ferritic stainless steel sheet. A hot rolled steel sheet or a hot rolled and annealed steel sheet is generally applied to a steel sheet material with a large gauge thickness, and therefore the mainstream measures for improving the toughness have related to the hot rolling conditions (see PTLs 1 to 4). However, in the mass production sites of stainless steel sheets, various types of steel are applied to a hot rolling line. The use of the dedicated operation condition that is different from the general ferritic stainless steel sheets, in the production of the Ti-containing ferritic stainless steel sheet may be a factor of deterioration of the overall productivity.

[Citation List]

[Patent Literatures]

PTL 1: JP-A-60-228616
PTL 2: JP-A-64-56822
PTL 3: JP-A-2012-140688
PTL 4: JP-A-2015-187290

[Summary of Invention]

[Technical Problem]

An object of the invention is to provide a Ti-containing ferritic stainless steel sheet having good toughness that is capable of being obtained in the case where a general hot rolling condition is used, and a flange using the same.

[Solution to Problem]

The object can be achieved by the following inventions.

(1) A Ti-containing ferritic stainless steel sheet having a chemical composition containing, in terms of percentage by mass, from 0.003 to 0.030% of C, 2.0% or less of Si, 2.0% or less of Mn, 0.050% or less of P, 0.040% or less of S, from 10.0 to 19.0% of Cr, 0.030% or less of N, 4 (C+N) or more and 0.80% or less of Ti, and from 0.010 to 0.20% of Al, with the balance of Fe and unavoidable impurities, and having a content R (% by mass) of an extraction residue recovered by an electrolytic extraction method and contents of C and N in the steel that satisfy the following expression (1):

$$R > 5.0C + 4.4N - 0.025 \qquad (1)$$

wherein in the lower limit of the Ti content and the expression (1), C and N represent the contents of C and N in the steel in terms of percentage by mass respectively.

(2) The Ti-containing ferritic stainless steel sheet according to the item (1), wherein in the chemical composition, the C content is from 0.007 to 0.030% by mass.

(3) The Ti-containing ferritic stainless steel sheet according to the item (1) or (2), wherein the Ti-containing ferritic stainless steel sheet has the chemical composition further containing, in terms of percentage by mass, 1.50% or less of Mo.

(4) The Ti-containing ferritic stainless steel sheet according to any one of the items (1) to (3), wherein the Ti-containing ferritic stainless steel sheet has the chemical composition further containing, in terms of percentage by mass, 0.0050% or less of B.

(5) The Ti-containing ferritic stainless steel sheet according to any one of the items (1) to (4), wherein the Ti-containing ferritic stainless steel sheet has a sheet thickness of from 5.0 to 11.0 mm.

(6) A flange using the Ti-containing ferritic stainless steel sheet according to any one of the items (1) to (5).

(7) The flange according to the item (6), wherein the flange is a flange for an exhaust gas flow path.

(8) The flange according to the item (6), wherein the flange is a flange for an automobile exhaust gas flow path.

Method for obtaining Content R of Extraction Residue in Steel

In a non-aqueous electrolytic solution containing 10% by mass of acetylacetone, 1% by mass of tetramethylammonium chloride, and 89% by mass of methyl alcohol, a specimen having a known mass collected from the steel sheet is applied with a potential of from -100 mV to 400 mV with respect to a saturated calomel electrode (SCE) to dissolve the matrix (metallic substrate) of the specimen completely, the liquid containing the undissolved matter is filtered with a membrane filter having a pore diameter of 0.05 μm, and the solid matter remaining on the filter is recovered as the extraction residue. The mass ratio of the extraction residue occupied in the mass of the specimen dissolved is designated as R (% by mass).

[Advantageous Effects of Invention]

According to the invention, a Ti-containing ferritic stainless steel sheet having good toughness can be achieved. The enhancement of the reliability by the improvement of the toughness is particularly large in a steel sheet having a large gauge thickness (for example, a sheet thickness of from 5.0 to 11.0 mm), in which the influence of the reduction in toughness tends to be conspicuous. The steel sheet can be produced without providing any particular restriction in the hot rolling condition, which therefore leads to the enhancement of the productivity of the continuous hot rolling line. Furthermore, a flange for an exhaust gas flow path excellent in toughness can be obtained by using the steel sheet as a material therefor.

[Description of Embodiments]

Chemical Composition

The invention targets a ferritic stainless steel containing the following component elements. The percentage for the chemical composition of the steel sheet is percentage by mass unless otherwise indicated.

C hardens the steel and is a factor that reduces the toughness of the hot rolled steel sheet. The C content (i.e., the total amount of dissolved C and C present as a compound) is restricted to 0.030% or less. The C content is preferably 0.020% or less, and may be managed to 0.015% or less. An excessive decrease of C may increase the load on steel making and may increase the cost. A steel sheet having a C content of 0.003% or more is targeted herein.

Si and Mn are effective as a deoxidizing agent, and in addition, have a function that enhances the high temperature oxidation resistance. It is more effective to ensure the content of 0.02% or more for Si and 0.10% or more for Mn. Large amounts of these elements contained may be a factor causing the embrittlement of the steel. The Si content is restricted to 2.0% or less, and more preferably 1.0% or less. The Mn content is also restricted to 2.0% or less, and more preferably 1.0% or less.

Large amounts of P and S contained may be a factor that reduces the corrosion resistance. The P content is allowed to be up to 0.050%, and the S content is allowed to be up to 0.040%. An excessive decrease of P and S may increase the load on steel manufacturing and may not be economically effective. In general, the P content may be controlled in a range of from 0.010 to 0.050%, and the S content may be controlled in a range of from 0.0005 to 0.040%.

Cr is important for ensuring the corrosion resistance as a stainless steel. Cr is also effective for enhancing the high temperature oxidation resistance. For exhibiting these functions, the Cr content is necessarily 10.0% or more. A large amount of Cr contained may harden the steel to impair the improvement of the toughness of the hot rolled steel sheet having a large gauge thickness in some cases. A steel sheet having a Cr content of 19.0% or less is targeted herein.

N is a factor that reduces the toughness of the hot rolled steel as similar to C. The N content (i.e., the total amount of dissolved N and N present as a compound) is restricted to 0.030% or less. The N content is preferably 0.020% or less, and may be managed to 0.015% or less. An excessive decrease of N may increase the load on steel manufacturing and may increase the cost. In general, the N content may be controlled in a range of 0.003% or more.

Ti forms a Ti carbonitride through bonding with C and N to suppress the segregation of a Cr carbonitride at the grain boundaries, and thus is an element that is considerably effective for retaining the corrosion resistance and the high temperature oxidation resistance of the steel. For achieving the function sufficiently, a ferritic stainless steel having a Ti content that is 4 times or more the total content of C and N in terms of percentage by mass is targeted herein. An excessive large Ti content is not preferred since the reduction of the toughness of the hot rolled steel sheet may be promoted. As a result of various investigations, the Ti content is restricted to 0.80% or less, and Ti is more preferably contained in an amount in a range of 0.50% or less. In the description herein, the "carbonitride" means a compound containing a metal element bonded to at least one of C and N. As for the Ti carbonitride, for example, TiC, TiN, and Ti(C,N) are encompassed therein.

Al is effective as a deoxidizing agent. For achieving the function sufficiently, it is effective to add Al to make an Al content of 0.010% or more. A large amount of Al contained may be a factor that reduces the toughness. The Al content is restricted to 0.20% or less.

Mo is effective for enhancing the corrosion resistance, and may be added depending on necessity. In this case, a Mo content of 0.01% or more is more effective. A large amount of Mo contained may adversely affect the toughness in some cases. The Mo content is necessarily in a range of from 0 to 1.50%, and may be managed to a range of from 0 to 0.50%.

B is effective for enhancing the secondary workability, and may be added depending on necessity. In this case, it is more effective to ensure the content thereof to 0.0005% or more. However, when the B content exceeds 0.0050%, the uniformity of the metal structure may be impaired due to the formation of $Cr_2B$ to reduce the workability in some cases. The B content may be in a range of from 0 to 0.0050%.

Content of Extraction Residue in Steel

In the case of the Ti-containing ferritic stainless steel having the aforementioned chemical structure, the extraction residue that is recovered by the aforementioned electrolytic extraction method contains a Ti carbonitride as a major component. Ti is an element that is added to fix C and N as described above. In the Ti-containing ferritic stainless steel sheet, it is generally considered that the most amount of N is present in the steel sheet in the form that is bonded to Ti. On the other hand, C has an increased proportion thereof that is solid-dissolved in the matrix without bonding to Ti, as compared to N. Ti is not generally consumed for the formation of the carbonitride, but Ti that does not form the carbonitride is present in the steel sheet.

According to the studies by the inventors, it has been found that in the Ti-containing ferritic stainless steel sheet, C that is not bonded to Ti but is present in the form of solid solution is a major factor that causes the reduction of the toughness. Therefore, for the improvement of the toughness, it is considerably effective that the amount of solid-dissolved C is decreased, i.e., C is made to present in a state bonded to Ti as much as possible. The decrease of the amount of solid-dissolved C is reflected to the amount of the Ti carbonitride formed. The Ti-containing ferritic stainless steel sheet having a large toughness improvement effect is identified herein by the content R (% by mass) of the extraction residue recovered by the electrolytic extraction method as a parameter.

As a result of various investigations, it has been found that in the Ti-containing ferritic stainless steel having the aforementioned chemical structure, the toughness of the steel sheet having a large gauge thickness, e.g., a sheet thickness of from 5.0 to 11.0 mm, is significantly improved when the metal structure is controlled in such a state that the content R (% by mass) of the extraction residue recovered by the electrolytic extraction method and the contents of C and N in the steel satisfy the following expression (1). In this case, unforeseen troubles due to the reduction of the toughness, which may be a problem in passing the sheet in cold rolling or in working a steel sheet having a large gauge thickness as a base material to a component, can be avoided.

$$R > 5.0C + 4.4N - 0.025 \qquad (1)$$

In the expression (1), C and N represent the contents of C and N in the steel in terms of percentage by mass respectively.

In the expression (1), the term "5.0C" corresponds to the mass proportion of TiC on the assumption that C in the steel is entirely bonded to Ti, and the term "4.4N" corresponds to the mass proportion of TiN on the assumption that N in the steel is entirely bonded to Ti. The term "-0.025" corresponds to the value obtained by converting the maximum amount of the solid-dissolved C and the solid-dissolved N that is allowable for the toughness improvement effect provided sufficiently, to the amount of the Ti carbonitride. However, it is considered that N is bonded preferentially to Ti than C, and therefore the term "-0.025" may be substantially regarded as the allowable amount of the solid-dissolved C.

Production Method

The Ti-containing ferritic stainless steel sheet having a solid-dissolved C amount decreased to satisfy the expression (1) can be achieved by adding a heat treatment step in a particular temperature range, to an ordinary production process of a stainless steel sheet. For example, a hot rolled steel sheet is produced in an ordinary method, and the hot rolled steel sheet is annealed to provide an annealed steel sheet. The temperature of the annealing of the hot rolled sheet may be, for example, more than 950°C and 1,150°C or less, and is more preferably more than 1,000°C and 1,150°C or less. The resulting annealed steel sheet is subjected to a heat treatment by retaining the steel sheet in a temperature range of 750°C or more and 1,000°C or less for 60 seconds or more. When the retaining temperature is less than 750°C, the formation of TiC may be hard to proceed, and the decrease of the solid-dissolved C may be insufficient. When the retaining temperature exceeds 1,000°C, the dissolution of TiC tends to proceed, and the decrease of the solid-dissolved C may be difficult. The retaining temperature is more preferably 750°C or more and 950°C or less, and may be managed to 750°C or more and 900°C or less. The retaining time may be set in a range of 60 minutes or less, and more preferably 10 minutes or less. It has been found that the heat treatment introduced provides the structure state satisfying the expression (1). The optimum conditions for the retaining temperature and the retaining time may be comprehended by performing a preliminary experiment corresponding to the condition for the annealing performed before the heat treatment and the chemical composition.

[Examples]

Example 1

Steels having the chemical compositions shown in Table 1 were made, hot rolled under condition for an ordinary ferritic stainless steel sheet, and annealed at 1,080°C in an annealing and acid pickling line, so as to provide an annealed steel sheet. Steel sheets that were obtained by subjecting the annealed steel sheets to a heat treatment or steel sheets that were not subjected to a heat treatment (i.e., the annealed steel sheets) were used as test steel sheets. The conditions of the heat treatment are shown in Table 2.

[Table 1]

Table 1

| No. | Chemical composition (% by mass) | | | | | | | | | | | 4 (C+N) |
|-----|-------|------|------|-------|-------|-------|-------|-------|-------|-------|--------|---------|
|     | C     | Si   | Mn   | P     | S     | Cr    | N     | Ti    | Al    | Mo    | B      |         |
| 1   | 0.012 | 0.25 | 0.23 | 0.025 | 0.002 | 10.96 | 0.013 | 0.270 | 0.082 | -     | 0.0025 | 0.100   |
| 2   | 0.007 | 0.31 | 0.51 | 0.027 | 0.005 | 18.12 | 0.010 | 0.240 | 0.053 | 0.210 | 0.0029 | 0.068   |
| 3   | 0.008 | 0.15 | 0.31 | 0.033 | 0.004 | 17.45 | 0.013 | 0.250 | 0.066 | -     | -      | 0.084   |
| 4   | 0.021 | 0.51 | 0.45 | 0.026 | 0.005 | 17.10 | 0.020 | 0.320 | 0.105 | 0.220 | -      | 0.164   |
| 5   | 0.017 | 0.45 | 0.20 | 0.027 | 0.006 | 18.87 | 0.018 | 0.290 | 0.045 | -     | -      | 0.140   |
| 6   | 0.012 | 0.21 | 0.19 | 0.031 | 0.007 | 11.05 | 0.008 | 0.210 | 0.072 | -     | -      | 0.080   |
| 7   | 0.020 | 0.35 | 0.32 | 0.034 | 0.004 | 18.90 | 0.016 | 0.290 | 0.040 | 0.210 | -      | 0.144   |
| B   | 0.022 | 0.55 | 0.30 | 0.024 | 0.002 | 17.31 | 0.011 | 0.310 | 0.035 | -     | -      | 0.132   |
| 9   | 0.010 | 0.41 | 0.34 | 0.029 | 0.003 | 17.29 | 0.013 | 0.240 | 0.029 | -     | -      | 0.092   |
| 10  | 0.009 | 0.38 | 0.41 | 0.027 | 0.003 | 17.24 | 0.015 | 0.210 | 0.080 | -     | 0.0026 | 0.096   |

A specimen was collected from the test steel sheet, and the value R thereof was obtained by the "Method for obtaining Content R of Extraction Residue in Steel" described in the foregoing.
A U-notch impact test specimen was produced form the test steel sheet and subjected to a Charpy impact test at temperatures of 70°C or less with an interval of 10°C according to JIS Z2242:2005. The application direction of the impact with a hammer (i.e., the depth direction of the U-notch) was a direction perpendicular to the rolling direction and the sheet thickness direction. The number of the specimens for each of the temperatures was n = 3, and the lowest impact value (i.e., the worst value) among them was designated as the impact value of the test steel sheet at that temperature. In the description herein, the lowest temperature that provides an impact value of 150 J/cm$^2$ or more in the tests with an interval of 10°C is defined as DBTT. When the DBTT is 30°C or less in the steel sheet having a large gauge thickness (for example, a sheet thickness of from 5.0 to 11.0 mm) of the Ti-containing steel species having the aforementioned chemical composition, it can be evaluated that the reliability in the aspect of the toughness is significantly improved. Accordingly, the specimens having DBTT of 30°C or less are judged as "good" (passing for toughness improvement), and the other specimens are judged as "poor" (not passing for the toughness improvement).

The results are shown in Table 2.

[Table 2]

Table 2

| No. | Sheet thickness (mm) | Heat treatment | | Exapression (1) | | | Toughness | | Class |
|---|---|---|---|---|---|---|---|---|---|
| | | Temperature (°C) | Time (s) | Content R of extraction residue [A] | 5.0C+4.4N-0.025 [B] | [A]-[B]. | DBTT (°C) | Evaluation | |
| 1 | 10.5 | 950 | 60 | 0.100 | 0.092 | 0.008 | 30 | good | Invention Example |
| 2 | 10.5 | 800 | 120 | 0.067 | 0.054 | 0.013 | 20 | good | Invention Example |
| 3 | 8.3 | 750 | 180 | 0.078 | 0.072 | 0.006 | 30 | good | Invention Example |
| 4 | 6.1 | 850 | 60 | 0.174 | 0.168 | 0.006 | 30 | good | Invention Example |
| 5 | 6.1 | 850 | 120 | 0.148 | 0.139 | 0.009 | 30 | good | Invention Example |
| 6 | 8.3 | (none) | | 0.046 | 0.070 | -0.024 | 50 | poor | Comparative Example |
| 7 | 8.3 | (none) | | 0.111 | 0.145 | -0.034 | 60 | poor | Comparative Example |
| 8 | 10.5 | (none) | | 0.103 | 0.133 | -0.030 | 60 | poor | Comparative Example |
| 9 | 6.1 | (none) | | 0.059 | 0.082 | -0.023 | 50 | poor | Comparative Example |
| 10 | 6.1 | (none) | | 0.067 | 0.086 | -0.019 | 50 | poor | Comparative Example |

Nos. 6 to 10 as Comparative Examples correspond to ordinary hot rolled annealed steel sheets. In all these steel sheets, the value [A]-[B] in Table 2 is a negative value and does not satisfy the expression (1). In the steel sheets of Invention Examples, the structure state satisfying the expression (1) is obtained by performing the appropriate heat treatment. It is understood that these steel sheets are significantly improved in toughness as compared to Comparative Examples.

**Claims**

1. A Ti-containing ferritic stainless steel sheet having a chemical composition containing, in terms of percentage by mass, from 0.003 to 0.030% of C, 2.0% or less of Si, 2.0% or less of Mn, 0.050% or less of P, 0.040% or less of S, from 10.0 to 19.0% of Cr, 0.030% or less of N, 4(C+N) or more and 0.80% or less of Ti, and from 0.010 to 0.20% of Al, with the balance of Fe and unavoidable impurities, and having a content R (% by mass) of an extraction residue recovered by an electrolytic extraction method and contents of C and N in the steel that satisfy the following expression (1):

$$R > 5.0C + 4.4N - 0.025 \qquad (1)$$

   wherein in the lower limit of the Ti content and the expression (1), C and N represent the contents of C and N in the steel in terms of percentage by mass respectively.

2. The Ti-containing ferritic stainless steel sheet according to claim 1, wherein in the chemical composition, the C content is from 0.007 to 0.030% by mass.

3. The Ti-containing ferritic stainless steel sheet according to claim 1, wherein the Ti-containing ferritic stainless steel sheet has the chemical composition further containing, in terms of percentage by mass, 1.50% or less of Mo.

4. The Ti-containing ferritic stainless steel sheet according to claim 1, wherein the Ti-containing ferritic stainless steel sheet has the chemical composition further containing, in terms of percentage by mass, 0.0050% or less of B.

5. The Ti-containing ferritic stainless steel sheet according to claim 1, wherein the Ti-containing ferritic stainless steel sheet has a sheet thickness of from 5.0 to 11.0 mm.

6. A flange using the Ti-containing ferritic stainless steel sheet according to any one of claims 1 to 5.

7. The flange according to claim 6, wherein the flange is a flange for an exhaust gas flow path.

8. The flange according to claim 6, wherein the flange is a flange for an automobile exhaust gas flow path.

# EP 3 434 800 A1

## INTERNATIONAL SEARCH REPORT

International application No.

PCT/JP2017/004348

### A. CLASSIFICATION OF SUBJECT MATTER

*C22C38/00*(2006.01)i, *C22C38/38*(2006.01)i, *C21D8/02*(2006.01)n

According to International Patent Classification (IPC) or to both national classification and IPC

### B. FIELDS SEARCHED

Minimum documentation searched (classification system followed by classification symbols)
C22C38/00-38/60, C21D8/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2007-224342 A (Nippon Steel & Sumikin Stainless Steel Corp.),<br>06 September 2007 (06.09.2007),<br>claims; paragraphs [0030] to [0076]<br>(Family: none) | 1,3-4<br>5-8<br>2 |
| Y | JP 2010-70799 A (JFE Steel Corp.),<br>02 April 2010 (02.04.2010),<br>claims; paragraphs [0001] to [0002]<br>(Family: none) | 5-8 |
| Y | JP 2012-140687 A (Nisshin Steel Co., Ltd.),<br>26 July 2012 (26.07.2012),<br>claims; paragraphs [0001] to [0003]<br>(Family: none) | 5-8 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 02 May 2017 (02.05.17) | 16 May 2017 (16.05.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

9

**INTERNATIONAL SEARCH REPORT**

International application No.

PCT/JP2017/004348

C (Continuation).    DOCUMENTS CONSIDERED TO BE RELEVANT

| Category* | Citation of document, with indication, where appropriate, of the relevant passages | Relevant to claim No. |
|---|---|---|
| P,A | WO 2016/129580 A1  (Nippon Steel & Sumikin Stainless Steel Corp.), 18 August 2016 (18.08.2016), (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60228616 A
- JP 6456822 A
- JP 2012140688 A
- JP 2015187290 A